# EUROPEAN PATENT SPECIFICATION

(11) **EP 0 803 088 B1**
(45) Date of publication and mention of the grant of the patent: **27.08.2003**
(21) Application number: 96935200.4
(22) Date of filing: 30.10.1996
(51) Int. Cl.: G06F 3/033

(54) **METHOD OF AND SYSTEM FOR SELECTING A FUNCTION IN AN APPLICATION**
VERFAHREN UND SYSTEM ZU AUSWAHL EINER FUNKTION IN EINEM ANWENDUNGSPROGRAMM
PROCEDE ET SYSTEME DE SELECTION D'UNE FONCTION DANS UNE APPLICATION

(30) Priority: 10.11.1995 EP 95203069
(43) Date of publication of application: 29.10.1997
(73) Proprietor: Koninklijke Philips Electronics N.V., 5621 BA Eindhoven (NL); PHILIPS NORDEN AB, 164 85 Stockholm (SE)
(72) Inventor: WOUTERS, Mirjam, Suzanne, NL-5656 AA Eindhoven (NL)
(74) Representative: Groenendaal, Antonius Wilhelmus Maria
(86) International application number: IB9601165
(87) International publication number: WO97017650

(56) References cited:
- EP-A- 0 547 993
- US-A- 5 303 388
- US-A- 5 404 440

## Description

The invention relates to a method enabling a user to select a function from among a plurality of available functions of an application, functions being selectable from at least two different menus of, each menu containing a series of selectable items, each selectable item being associated with one or more of the available functions.

The invention also relates to a system enabling a user to select a function from among a plurality of available functions of an application, comprising presentation means for presenting at least two different menus with functions for selection, each menu containing a series of selectable items, a selectable item being associated with one or more of the available functions.

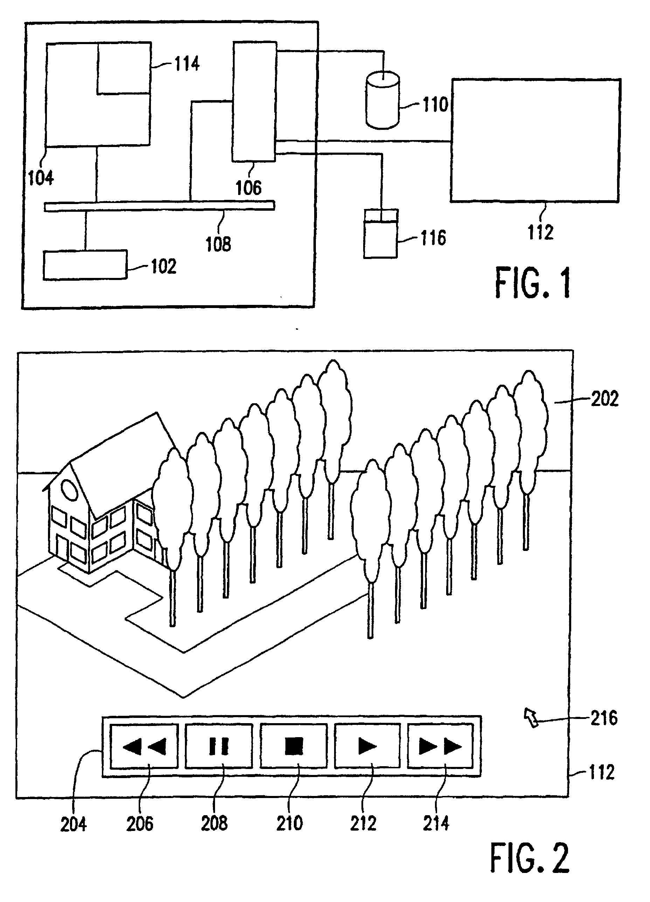

A method and a system of the kind set forth are known from United States Patent US-A-5,404,440. In the known system the result (the output) of an application program is displayed on a display screen. The application program is controlled by means of menus containing selectable items, usually referred to as buttons, which are displayed on the display screen. An item in a menu corresponds to a given function in the application program. In this respect see Fig. 1(b) with items 33-35 in a first menu and with items 36-41 in a second menu. It is a drawback of the known method and the known system that a comparatively large part of the display screen is occupied by the menus, so that only a comparatively small part of the display screen remains available for output of the application program. It is a further drawback of the known method and the known system that they constitute a cognitive burden to the user who must at the same time select a given menu and a given function therein.

US-A-5303388 discloses a manipulable icon displayed with multiple faces having particular application to computer displays and systems. The icon, which represents information about an object available within the computer, can be manipulated by the user to display different faces or views which provide additional information about the object represented by the icon. The user has the ability to manipulate the icon to see additional views of the icon on the computer display device, either by a mouse stroke selection command, keyboard command or menu selection proposed on a menu bar presented at the top of the screen. This selection causes the icon to move from one view or face of the icon to another view or face of the icon. These additional views thus provide additional space in which the icon can supply additional information to the user, including selectable objects permitting the user to activate some associated functions, e.g. opening a document. Iconic movement from one face or view to another is also typically accompanied by some sound which indicates execution of the movement.

It is an object of the invention to provide a method of the kind set forth with improved selection of a function in the application program which is referred to hereinafter as the application for the sake of brevity. It is a further object of the invention to provide a system of the kind set forth which is suitable for carrying out the method in accordance with the invention. To achieve this, a method in accordance with the invention is set out in claim 1 and a corresponding system is set out in claim 5.

In accordance with the invention, different menus are represented as different surfaces on a spatial object, only one menu being directly accessible for selection of the associated items. This offers the advantage that on the display screen space is required for the one menu only, so that more space remains for output of the application. Due to the representation of the menus by surfaces of an object, the user experiences a natural categorization of the functions of the applications. The various menus are experienced as being coherent, because they relate to one object. A menu is experienced as being different from another menu in that it is represented by way of a different surface of the object. The selectable items of a menu, and the associated functions, are experienced as being coherent because they are represented by one surface of the object. The metaphor of a spatial object offers a natural categorization which results in simpler and less ambiguous access to the functions of the application.

A version of the method in accordance with the invention is characterized in that the first surface of the representation of the spatial object adjoins the second surface of the representation of the spatial object and that, after detection of selection of the first selectable menu selection button, the representation of the object is rotated in order to turn the first surface with the first menu away from the user and to turn the second surface with the second menu towards the user. As a result of the presentation of two different menus on adjoining surfaces of the object, the transition from one menu to the other menu is represented by a rotation of the object. The original menu is then replaced by the newly selected menu in a manner which is very distinct to the user. Furthermore, the user will readily learn the order of the menus, so that the access to the functions of the application is enhanced.

A version of the method in accordance with the invention, in which functions can be selected from three menus, is characterized in that each of the menus includes a respective first selectable menu selection button and a respective second selectable menu selection button, that each of three of said surfaces adjoins the other two surfaces, and that after detection of selection of a given menu selection button of a given menu the representation of the object is rotated in order to turn the surface with the given menu away from the user and to turn towards the user the surface with the associated other one of the three menus, corresponding to the given menu selection button. The object then has three surfaces, each of which represents a menu and adjoins the two other surfaces. Furthermore, each menu comprises two menu selection buttons whereby the one or the other adjoining menu can be selected from said menu. Thus, from any menu any other menu can be selected by a single selection of a menu selection button. The selection of another menu from an instantaneous menu is represented by the rotation of the object, so that the instantaneous surface is turned away and replaced by the surface corresponding to the other menu. Such a representation of and selection from three menus on three surfaces of an object offers the user a simple, natural navigation through the functions of the application.

Further attractive versions of the method and the system in accordance with the invention are disclosed in dependent Claims.

The invention in general is related to a system described in United States Patent Application US-A-5 684 511 in the name of Applicant and the corresponding European Patent EP 535 732 (PHN 13.840). This system involves a menu with selectable elements and, after selection, a list with stored proposals concerning the relevant element can be passed through.

The invention in general is also related to a system described in United States Patent US-A-5 715 417 in the name of Applicant, corresponding European Patent Application EP 0 728 330, published at WIPO under number WO-A-9 608 758. This system involves a menu with selectable items, the system cyclically proposing one of the items for selection.

These and other aspects of the invention will be apparent from and elucidated with reference to the embodiments described hereinafter.

In the drawings:
Fig. 1 shows diagrammatically a system for carrying out the invention,
Fig. 2 shows a known example of a representation with a menu on the display screen,
Figs. 3A, 3B and 3C show an example of a menu in accordance with the invention,
Fig. 4 shows a preferred version of the menu in accordance with the invention,
Figs. 5A, 5B and 5C illustrate the use of the preferred version for a digital video application,
Figs. 6A, 6B and 6C show some different appearances of the video control menu, and
Fig. 7 shows a menu with menu selection buttons for selecting menus in two dimensions.

Corresponding reference numerals in the drawing denote corresponding or similar components.

Fig. 1 shows diagrammatically a system for carrying out the invention. The system is set up in conformity with a known architecture and can be implemented on a general purpose computer. The system comprises a processor 102 for the execution of instructions of an application program loaded into a working memory 104. The system also comprises an interface 106 for communication with peripheral equipment. A bus 108 is provided for the exchange of commands and data between the various parts of the system. The peripheral equipment of the system comprises a storage medium 110 with the program to be executed and with data for the program. In a given embodiment the storage medium is realized as an optical disc; however, for carrying out the invention various other media are feasible, for example a magnetic disc, tape, chip card, solid-state memory, or a combination of these media. The peripheral equipment also includes a display screen 112 on which the program can present data to a user and also a menu for control of the program by the user. A part of the program, indicated by presentation means 114, is arranged to present the menu. Finally, the peripheral equipment comprises a point-out means 116 whereby the user can control a cursor on the display screen, thus pointing out given items in the menu. In a given embodiment, the point-out means is formed by a mouse; however, other point-out means such as a track ball, graphic tablet, joystick or an appropriate remote control are also feasible.

Fig. 2 shows a known example of a representation with a menu on the display screen. The example concerns an application program for the reproduction of recorded video information, for example a video CD. The application program displays video images 202 and a menu 204 for controlling the application program on the display screen 112. The menu can be presented in a part of the display screen especially reserved for this purpose, or can be superposed on the video image. The menu 204 comprises selectable items 206-214, each of which is associated with a given function in the application program. In this exemplary application concerning the reproduction of video information the menu 204 comprises: item 206 for fast reverse reproduction of the information, item 208 for a still image, item 210 for stopping the reproduction, item 212 for starting the reproduction, and item 214 for fast forward reproduction. The user selects a given function by moving the cursor 216 to the selectable item corresponding to the relevant function and by subsequently giving a confirmation, for example by depressing a button provided for this purpose. If control of the application requires a further menu with selectable items in addition to the menu 204, it will be necessary to display said further menu elsewhere on the display screen. In this respect see, for example, Fig. 1(b) of the cited United States Patent 5,404,440.

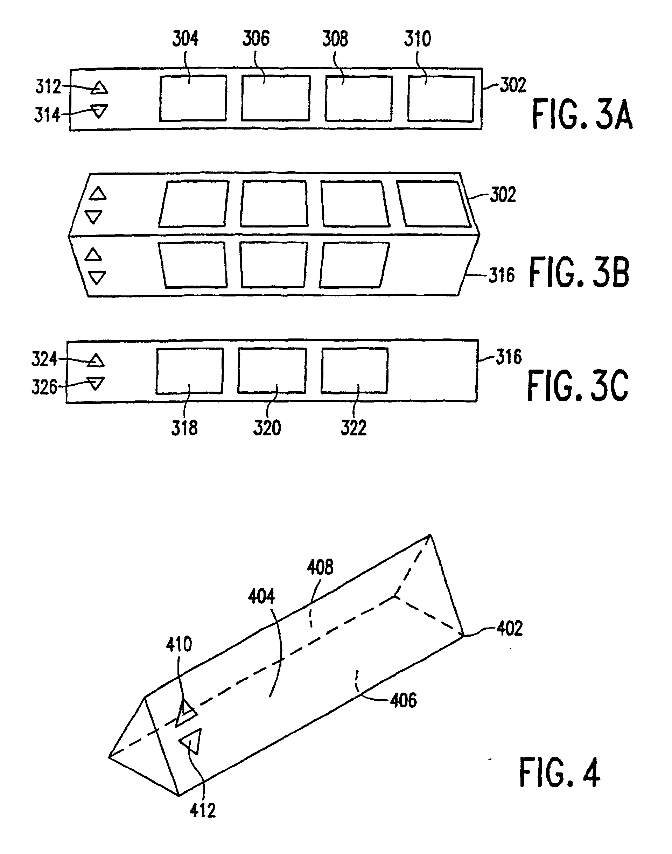

The Figs. 3A, 3B and 3C show an example of a menu in accordance with the invention. Fig. 3A shows a first menu 302 which comprises, in addition to the selectable items 304-310, a menu selection button 312 and a menu selection button 314. Each of the selectable items corresponds to a function of the application which can be selected in the described manner. A second menu, containing a second group of functions of the application, can be activated by selection of one of the menu selection buttons. In accordance with the invention, the first menu 302 and the second menu are represented as different surfaces of one and the same spatial object. Selection of the menu selection button 314 in the first menu 302 causes a rotation of the spatial object, so that the first menu is turned away from the user and the second menu is turned towards the user.

Fig. 3B illustrates the changing over from the first to the second menu in accordance with the invention. Selection of the menu selection button 314 causes a rotation of the object so that the first menu 302 disappears and the second menu 316 appears. Fig. 3C shows the second menu 316, comprising its own selectable items 318-322 and menu selection buttons 324 and 326. The user can then select an item from the menu 316 and thus activate the associated function of the application. The user can furthermore select a menu other than the instantaneous menu 316 by selection of the menu selection button 324 or 326. Using the menu selection button 324, the user can activate the previous menu 302 and the user can activate a possibly further menu by means of the menu selection button 326. The use of the invention is not limited by the number of menus and the number of associated surfaces of the object. As has already been stated, the invention can be used for two and three menus, but four or more menus are also feasible. The selection of a further menu can then be realized as a step-wise rotation by selection of each time a menu selection button in the menu just appearing. However, this could also be realized by including in each menu a specific menu selection button for each of the other menus. Any other menu can then still be directly activated by selection of a single menu selection button.

The spatial object for the representation of menus by way of its surfaces offers a natural ordening of the menus, so that the user is assisted in navigating through the functions available in an application. A change-over from one menu to the other menu can be readily discerned by the user, thanks to a corresponding change-over between surfaces of the spatial object. The coherence of the selectable items in one menu is supported by the presentation of these items on one surface in space.

In the example of Fig. 3 the menu selection buttons are shown as forming part of the menus so that they rotate together with the menus in the case of a menu change. However, it is alternatively possible to implement the menu selection buttons as a part of the object which is situated adjacent the rotatable part with the menus. The part containing the menu selection buttons can then remain stationary when the menu changes. Alternatively, the menu selection buttons could be presented completely separately from the object with the menus, for example on a separate object. Furthermore, the menus can be represented as an object consisting of separately rotatable parts for each of the items of a menu. Via a menu selection button an individual item of a menu can then be replaced by an item from one of the other menus. This feature can be used, for example if a high degree of correspondence exists between the various menus which differ by each time only one or a few items. When the menu changes, the user then sees that only one item changes and hence knows that the other items continue to represent the same function.

Fig. 4 shows a preferred version of the menu in accordance with the invention. This version involves three menus, each of which comprises selectable items which correspond to one or more functions in the application. The menus are presented on an object 402 which is shown in perspective in Fig. 4 for the sake of clarity. The object comprises three elongate, rectangular surfaces which adjoin one another two-by-two, one of the menus being presented on each surface. The object comprises a front surface 404, a base surface 406 and a rear surface 408. An item can be selected exclusively from the menu whose surface is being shown. The other surfaces are not visible. Each of the menus comprises a first menu selection button 410 for selection of the menu on one non-visible surface, and a second menu selection button 412 for selecting the menu on the other non-visible surface. The selection of a menu selection button involves a point-out step in which the user moves a cursor to the desired menu selection button by means of the point-out means, and an action step in which the user activates the menu selection button pointed out, for example by depressing a confirmation button on the point-out means. When the cursor points out a given menu selection button, the name and possibly a brief description of the menu corresponding to the given menu selection button appears on the display screen. In the situation illustrated by Fig. 4 the selection of the menu selection button 410 causes the surface 404 to be turned downwards and the surface 408 to be turned forwards in order to activate the menu presented thereon. The selection of the menu selection button 412 causes the surface 404 to be turned upwards and the surface 406 to be turned forwards so as to activate the menu presented thereon. This version offers the user the advantage that from the instantaneous menu any one of the other menus can be activated by a single selection of the relevant menu selection button.

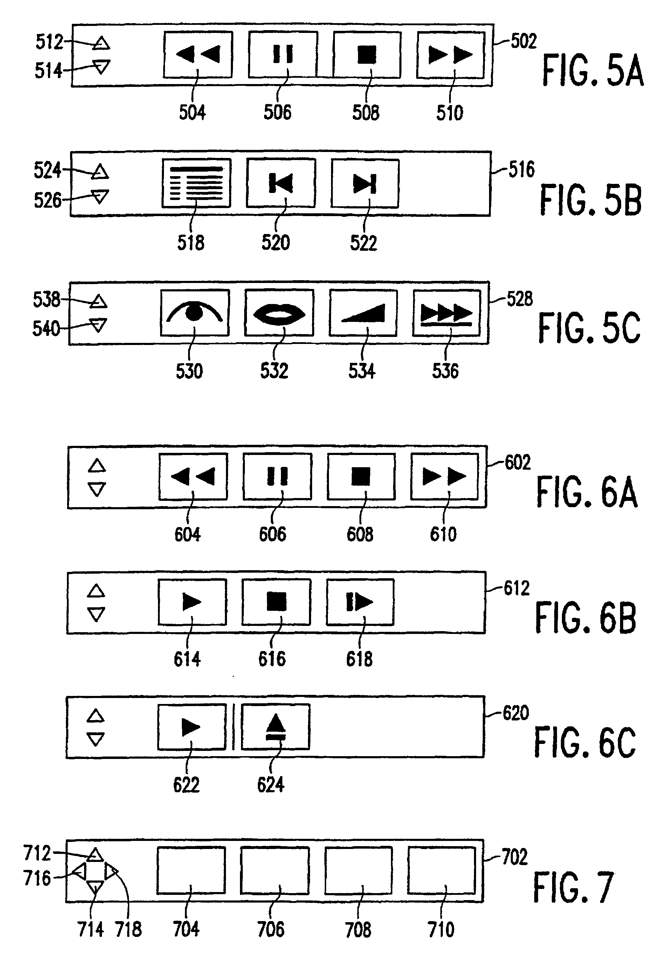

Figs. 5A, 5B and 5C illustrate the use of the preferred version for a digital video application. The menus successively shown in these Figures are represented by successive surfaces of a spatial object as shown in Fig. 4. Fig. 5A shows a video control menu 502 for controlling video control functions in the digital video application. The menu 502 comprises an item 504 for fast reverse reproduction of the video information, an item 506 for pausing the reproduction of the video information, an item 508 for stopping the reproduction of the video information, and an item 510 for fast forward reproduction of the video information. When a user selects an item from the menu 502, the digital video application immediately executes the associated function. Furthermore, the video control menu 502 comprises a menu selection button 512 for selecting a settings menu 528 and a menu selection button 514 for selecting an index menu 516. Fig. 5B shows the index menu 516 for controlling the index functions in the digital video application. The menu 516 comprises an item 518 for showing the table of contents of the digital video information, an item 520 for jumping back to a previous chapter of the digital video information, and an item 522 for jumping forward to a next chapter of the digital video information. When a user selects the item 518, a pop-up window appears with the table of contents of the digital video information; the user is thus offered the possibility of selecting an element from the table of contents so as to resume the reproduction of the digital video information as from that point. Selection of the item 520 or 522 causes the application to proceed directly to the previous and the next chapter, respectively, of the digital video information so as to resume the reproduction. The index menu 516 also comprises a menu selection button 524 for selecting the video control menu 502 and a menu selection button 526 for selecting the settings menu 528. Fig. 5C shows the settings menu for controlling the settings functions in the digital video application. The settings menu 528 comprises an item 530 for the setting of reproduction options, a menu 532 for setting the language, an item 534 for setting the default volume, and an item 536 for setting the speed of the fast reproduction of the video information. After selection by the user for each of the items 530-534 a pop-up window is shown, in which the user can specify the relevant setting, after which the relevant function in the application is executed. The settings menu 528 also comprises a menu selection button 538 for selecting the index menu 516 and a menu selection button 540 for selecting the video control menu 502.

The Figs. 6A, 6B and 6C show a few different appearances of the video control menu. The digital video application may find itself in different states in relation to the reproduction of the video information. In a given state only given video control functions are relevant and the others need not be shown. For example, during normal reproduction of the digital video information it is not necessary to show an item whereby normal reproduction can be selected, because such reproduction is actually taking place. Fig. 6A shows the video control menu during normal reproduction. The video control menu 602 comprises an item 604 for fast reverse reproduction of the video information, an item 606 for pausing the reproduction of the video information, an item 608 for stopping the reproduction of the digital video information, and an item 610 for fast forward reproduction of the digital video information. When a user selects an item from the menu 602, the digital video application directly executes the associated function. Fig. 6B shows the video control menu during a pause in the reproduction. The video control menu 612 comprises an item 614 for normal reproduction of the digital video information, an item 616 for stopping the reproduction of the digital video information, and an item 618 for changing over to the next image in the video information. When a user selects an item from the menu 612, the digital video application directly executes the associated function. Fig. 6C shows the video control menu in the state in which reproduction has been stopped. The video control menu 620 comprises an item 622 for normal reproduction of the digital video information and an item 624 for removing the carrier with the digital video information. When a user selects an item from the menu 620, the digital video application directly executes the associated function. When only items which are of relevance at a given instant are included, the user will not be burdened by superfluous information and will not have to come to the conclusion that it does not make sense to select given items. The user is thus further assisted in selecting a function from the available functions in an application and the user's choice is thus simplified.

Fig. 7 shows a menu with menu selection buttons for selecting menus in two dimensions. In the above examples another menu can be activated by selection of one or more menu selection buttons. Even though a spatial object is concerned, thus far only one dimension is involved in which the surfaces with the other menus may be situated, i.e. below or above the instantaneous surface. For more complex applications the idea of the invention can be applied in a second dimension. In addition to the selectable items 704-710, the menu 702 comprises menu selection buttons 712 and 714 for selecting menus situated above and below the instantaneous menu, respectively. The instantaneous menu, however, can be returned to by repeatedly selecting the relevant menu selection buttons. The menu 702 also comprises a menu selection button 716 for selecting a menu situated on a surface to the left of the instantaneous surface, and a menu selection button 718 for selecting a menu situated on a surface to the right of the instantaneous surface. The menu selection buttons 716 and 718 provide a second dimension for the ordering of menus on the object. Each of the menus should then comprise menu selection buttons operating in two independent directions. An object of this kind could be realized in the form of a ring of sub-objects, for example sub-objects as shown in Fig. 4, if three menus are feasible in the bottom-up direction. Menu selection buttons 712 and 714 rotate the relevant sub-object and menu selection buttons 716 and 718 rotate the ring, a next sub-object thus being presented on the display screen.

Selection of an item from a menu activates the associated function of the application. Activation may constitute a direct execution of the relevant function by the application as well as the appearance of a pop-up menu for a further description of the function to be executed. For example, after selection of the item "STOP", the application will directly terminate the reproduction, whereas after selection of the item "LANGUAGE SELECTION" a pop-up menu will appear in which the actual language can be indicated.

The invention has been described on the basis of menus for an application for the reproduction of video information. The actual contents of the menu, i.e. which functions of an application program can be selected, however, are irrelevant for the use of the invention. Therefore, the invention is by no means limited to such a video application and can be used in numerous other menu-controlled application programs. These programs may be professional application programs, for example for drawing and word processing, but also leisure applications, for example game programs.

It has been described with reference to Fig. 1 that the method of the invention is used in a system which is provided with suitable program means 114 for this purpose. Such a program is usually supplied via an external storage medium 110 so as to be loaded into the working memory of the system. The program is stored on the storage medium in the form of instructions in a given standard format. A system suitable for reading and processing said standard format can subsequently carry out the invention. Examples of storage media with such a standard format are optical discs such as CD-Interactive, CD-ROM, Multimedia CD and Video CD, floppy discs and magnetic hard discs for IBM-compatible personal computers or for given Macintosh computers, tapes and cartridges for workstations such as SUN and Hewlett Packard. In these examples the receiving system is to some extent a general purpose type and is arranged to execute the program by the writing of the program instructions from the relevant storage medium. The menu selection in accordance with the invention can thus also be laid down in a program on a storage medium which can be loaded into an appropriate system.

## Claims

1. A method enabling a user to select a function from among a plurality of available functions of an application, functions being selectable from at least two different menus (302, 316), each menu containing a series of selectable items (304, 306, 308, 310, 318, 320, 322), each selectable item being associated with one or more of the available functions,
**characterized in that** a first menu of the at least two menus is displayed on a display screen as a first surface of a representation of a spatial object (402), that a menu selection option is offered for the selection of a second menu of the at least two menus, said menu selection option being offered as a first selectable menu selection button (312, 314) presented as a part of the spatial object, or of a separate object, and that after detection of selection of the menu selection option the second menu of the at least two menus is displayed as a second surface of said representation of the spatial object, the first menu then being at least partly displaced.

2. A method as claimed in Claim 1, in which the first surface of the representation of the spatial object adjoins the second surface of the representation of the spatial object and in which, after detection of selection of the first selectable menu selection button, the representation of the object is rotated (fig. 3B) in order to turn the first surface with the first menu away from the user and to turn the second surface with the second menu towards the user.

3. A method as claimed in Claim 1, in which a second selectable menu selection button is displayed for the selection of a third menu, comprising a series of selectable items in which a selectable item is associated with a given one of the available functions, and in which after detection of selection of the second selectable menu selection button the third menu is displayed as a third surface of said representation of the spatial object.

4. A method as claimed in Claim 3, in which each of the menus includes a respective first selectable menu selection button and a respective second selectable menu selection button, in which each of three of said surfaces adjoins the other two surfaces, and in which after detection of selection of a given menu selection button of a given menu the representation of the object is rotated in order to turn towards the user the surface with the given menu away from the user and to turn towards the user the surface with the associated other one of the three menus, corresponding to the given menu selection button.

5. A system enabling a user to select a function from among a plurality of available functions of an application, comprising presentation means for presenting at least two different menus (302, 316) with functions for selection, each menu containing a series of selectable items (304, 306, 308, 310, 318, 320, 322), a selectable item being associated with one or more of the available functions,
**characterized in that** the presentation means are arranged to display a first menu of the at least two menus as a first surface of a representation of a spatial object (402) on a display screen, that the presentation means are arranged to offer a menu selection option for the selection of a second menu of the at least two menus, and that the presentation means are arranged to display, after detection of selection of the menu selection option, the second menu of the at least two menus as a second surface of said representation of the spatial object, the first menu then being at least partly displaced.

6. A system as claimed in Claim 5, in which the first surface of the representation of the spatial object adjoins the second surface of the representation of the spatial object, and in which, after detection of selection of the first selectable menu selection button, the representation of the object is rotated (fig. 3B) in order to turn the first surface with the first menu away from the user and to turn the second surface with the second menu towards the user.

7. A system as claimed in Claim 5, in which the presentation means are arranged to display a second selectable menu selection button for the selection of a third menu comprising a series of selectable items in which a selectable item is associated with a given one of the available functions, and in which the presentation means are arranged to display, after detection of selection of the second selectable menu selection button, the third menu as a third surface of said representation of the spatial object.

8. A system as claimed in Claim 7, in which the presentation means are arranged to include a respective first selectable menu selection button and a respective second selectable menu selection button in each of the menus, each of three of said surfaces adjoining the other two surfaces, and in which the presentation means are arranged to rotate, after detection of selection of a given menu selection button of a given menu, the representation of the object in order to turn the surface with the given menu away from the user and to turn towards the user the surface with the associated other one of the three menus, corresponding to the given menu selection button.

9. A system as claimed in Claim 5, in which the presentation means are arranged to present the series of selectable items of at least one of the menus as an elongate row of respective buttons.

10. A system as claimed in Claim 5, in which the application is arranged to determine, in dependence on an internal state, which of the available functions can be instantaneously selected, and in which each of the selectable items in each of the menus is associated with one or more of the instantaneously selectable functions.

11. A system as claimed in Claim 5, enabling the user to select a function from an application for the reproduction of digital video information.

12. A machine-readable storage medium containing data representing a program, which program, when executed on a system, carries out a method as claimed in any one of the Claims 1 to 4.

## Patentansprüche

1. Verfahren, durch das einem Benutzer die Möglichkeit gegeben wird, aus einer Anzahl verfügbarer Funktionen einer Applikation eine Funktion zu selektieren, wobei die Funktionen aus wenigstens zwei verschiedenen Menüs (302, 316) selektierbar sind, wobei jedes Menü eine Reihe selektierbarer Items (304, 306, 308, 310, 318, 320, 322) aufweist, wobei jedes selektierbare Item mit einer oder mehreren der verfügbaren Funktionen assoziiert ist, **dadurch gekennzeichnet, dass** ein erstes Menü der wenigstens zwei Menüs als eine erste Fläche einer Darstellung eines räumlichen Objektes (402) an einem Wiedergabeschirm wiedergegeben wird, dass eine Menüselektionsoption gegeben wird zur Selektion eines zweiten Menüs der wenigstens zwei Menüs, wobei die genannte Menüselektionsoption als eine erste selektierbare Menüselektionstaste (312, 314) angeboten wird, dargestellt als ein Teil des räumlichen Objektes oder eines separaten Objektes, und dass nach der Detektion der Selektion der Menüselektionsoption das zweite Menü der wenigstens zwei Menüs als eine zweite Fläche der genannten Darstellung des räumlichen Objektes wiedergegeben wird, wobei das erste Menü dann wenigstens teilweise verlagert wird.

2. Verfahren nach Anspruch 1, wobei die erste Fläche der Darstellung des räumlichen Objektes an der zweiten Fläche der Darstellung des räumlichen Objektes anliegt und wobei nach Detektion der Selektion der ersten selektierbaren Menüselektionstaste die Darstellung des Objektes gedreht wird (Fig. 3B) um die erste Fläche mit dem ersten Menü von dem Benutzer weg zu drehen und die zweite Fläche mit dem zweiten Menü dem Benutzer zuzuwenden.

3. Verfahren nach Anspruch 1, wobei die zweite selektierbare Menüselektionstaste zur Selektion eines dritten Menüs wiedergegeben wird, wobei dieses Menü eine Reihe selektierbarer Items aufweist, wobei ein selektierbares Item mit einer bestimmten Funktion der verfügbaren Funktionen assoziiert ist, und wobei nach Detektion der Selektion der zweiten selektierbaren Menüselektionstaste das dritte Menü als eine dritte Fläche der genannten Darstellung des räumlichen Objektes wiedergegeben wird.

4. Verfahren nach Anspruch 3, wobei jedes der Menüs eine betreffende erste selektierbare Menüselektionstaste und eine betreffende zweite selektierbare Menüselektionstaste aufweist, wobei jede Fläche der drei genannten Flächen an den anderen zwei Flächen anliegt, und wobei nach der Detektion der Selektion einer bestimmten Menüselektionstaste eines bestimmten Menüs die Darstellung des Objektes gedreht wird, damit dem Benutzer die Fläche mit dem bestimmten Menü zugewandt wird, das von dem Benutzer abgewandt war und die Fläche mit dem anderen Menü der drei Menüs von dem Benutzer abgewandt wird.

5. System, mit dessen Hilfe einem Benutzer die Möglichkeit geboten wird, aus einer Anzahl verfügbarer Funktionen einer Applikation eine Funktion zu selektieren, mit Darstellungsmitteln zum Darstellen von wenigstens zwei verschiedenen Menüs (302, 316) mit Funktionen zum Selektieren, wobei jedes Menü eine Reihe selektierbarer Items aufweist (304, 306, 308, 310, 318, 320, 322), wobei ein selektierbares Item mit einer oder mehreren der verfügbaren Funktionen assoziiert ist, **dadurch gekennzeichnet, dass** die Darstellungsmittel dazu vorgesehen sind, ein erstes Menü der wenigstens zwei Menüs als eine erste Fläche einer Darstellung eines räumlichen Objektes (402) an einem Wiedergabeschirm wiederzugeben, dass die Darstellungsmittel dazu vorgesehen sind, eine Menüselektionsoption zu bieten zur Selektion eines zweiten Menüs der wenigstens zwei Menüs, und dass die Darstellungsmittel dazu vorgesehen sind, nach der Detektion der Selektion der Menüselektionsoption das zweite Menü der wenigstens zwei Menüs als eine zweite Fläche der genannten Darstellung des räumlichen Objektes wiederzugeben, wobei das erste Menü dann wenigstens teilweise verlagert wird.

6. System nach Anspruch 5, wobei die erste Fläche der Darstellung des räumlichen Objektes an der zweiten Fläche der Darstellung des räumlichen Objektes anliegt, und wobei nach der Detektion der Selektion der ersten selektierbaren Menüselektionstaste die Darstellung des Gegenstandes gedreht wird (Fig. 3B), damit die erste Fläche mit dem ersten Menü von dem Benutzer weg gedreht wird und damit die zweite Fläche mit dem zweiten Menü dem Benutzer zugewandt wird.

7. System nach Anspruch 5, wobei die Darstellungsmittel dazu vorgesehen sind, eine zweite selektierbare Menüselektionstaste zum Selektieren eines dritten Menüs mit einer Reihe selektierbarer Items wiederzugeben, wobei ein selektierbares Item mit einer bestimmten Funktion der verfügbaren Funktionen assoziiert ist und wobei die Darstellungsmittel dazu vorgesehen sind, nach der Detektion der Selektion der zweiten selektierbaren Menüselektionstaste das dritte Menü als eine dritte Fläche der genannten Darstellung des räumlichen Objektes wiederzugeben.

8. System nach Anspruch 7, wobei die Darstellungsmittel dazu vorgesehen sind, eine betreffende erste selektierbare Menüselektionstaste und eine betreffende zweite selektierbare Menüselektionstaste in jedem der Menüs zu enthalten, wobei jede Fläche der genannten drei Flächen neben den anderen zwei Flächen liegt, und wobei die Darstellungsmittel dazu vorgesehen sind, nach der Detektion der Selektion einer bestimmten Menüselektionstaste eines bestimmten Menüs die Darstellung des Objektes zu drehen, damit die Fläche mit dem betreffenden Menü von dem Benutzer weg gedreht wird und die Fläche mit dem anderen assoziierten Menü der drei Menüs, entsprechend der betreffenden Menüselektionstaste, dem Benutzer zugewandt wird.

9. System nach Anspruch 5, wobei die Darstellungsmittel dazu vorgesehen sind, die Reihe selektierbarer Items wenigstens eines der Menüs als eine längliche Reihe von betreffenden Tasten darzustellen.

10. System nach Anspruch 5, wobei die Applikation dazu vorgesehen ist, um in Abhängigkeit von dem internen Zustand zu bestimmen, welche der verfügbaren Funktionen sofort selektiert werden kann, und wobei jedes der selektierbaren Items in jedem der Menüs mit einer oder mehreren der sofort selektierbaren Funktionen assoziiert ist.

11. System nach Anspruch 5, das dem Benutzer die Möglichkeit bietet, aus einer Applikation zum Wiedergeben digitaler Videoinformation eine Funktion zu selektieren.

12. Mit einer Maschine lesbares Speichermittel mit Daten, die ein Programm darstellen, wobei dieses Programm, wenn auf ein System ausgeübt, ein Verfahren nach einem der Ansprüche 1 bis 4 durchführt.

## Revendications

1. Procédé permettant à un utilisateur de sélectionner une fonction parmi une pluralité de fonctions disponibles d'une application, les fonctions pouvant être sélectionnées à partir d'au moins deux menus différents (302, 316), chaque menu contenant une série d'éléments pouvant être sélectionnés (304, 306, 308, 310, 318, 320, 322), chaque élément pouvant être sélectionné étant associé à une ou plusieurs des fonctions disponibles, **caractérisé en ce qu'**un premier menu des au moins deux menus est affiché sur un écran d'affichage sous la forme d'une première surface d'une représentation d'un objet spatial (402), qu'une option de sélection de menu est offerte pour la sélection d'un deuxième menu des au moins deux menus, ladite option de sélection de menu étant offerte sous la forme d'un premier bouton de sélection de menu pouvant être sélectionné (312, 314) présenté comme une partie de l'objet spatial, ou d'un objet séparé, et **en ce qu'**après détection de la sélection de l'option de sélection de menu, le deuxième menu des au moins deux menus est affiché sous la forme d'une deuxième surface de ladite représentation de l'objet spatial, le premier menu étant alors au moins partiellement déplacé.

2. Procédé suivant la revendication 1, dans lequel la première surface de la représentation de l'objet spatial est attenante à la deuxième surface de la représentation de l'objet spatial, et dans lequel, après détection de la sélection du premier bouton de sélection de menu pouvant être sélectionné, la représentation de l'objet est déplacée par rotation (Fig. 3B) afin de tourner la première surface avec le premier menu dans une direction opposée à celle de l'utilisateur, et de tourner la deuxième surface avec le deuxième menu vers l'utilisateur.

3. Procédé suivant la revendication 1, dans lequel un deuxième bouton de sélection de menu pouvant être sélectionné est affiché pour la sélection d'un troisième menu, comportant une série d'éléments pouvant être sélectionnés dans laquelle un élément pouvant être sélectionné est associé à une fonction donnée des fonctions disponibles, et dans lequel, après détection de la sélection du deuxième bouton de sélection de menu pouvant être sélectionné, le troisième menu est affiché sous la forme d'une troisième surface de ladite représentation de l'objet spatial.

4. Procédé suivant la revendication 3, dans lequel chacun des menus comporte un premier bouton de sélection de menu pouvant être sélectionné respectif et un deuxième bouton de sélection de menu pouvant être sélectionné respectif, dans lequel chacune des trois desdites surfaces est attenante aux deux autres surfaces, et dans lequel, après détection de la sélection d'un bouton de sélection menu donné d'un menu donné, la représentation de l'objet est déplacée par rotation afin de tourner vers l'utilisateur la surface avec le menu donné dans une direction opposée à celle l'utilisateur, et de tourner vers l'utilisateur la surface avec l'autre menu associé des trois menus, correspondant au bouton de sélection de menu donné.

5. Système permettant à un utilisateur de sélectionner une fonction parmi une pluralité de fonctions disponibles d'une application, comportant des moyens de présentation pour présenter au moins deux menus différents (302, 316) avec des fonctions pour la sélection, chaque menu contenant une série d'éléments pouvant être sélectionnés (304, 306, 308, 310, 318, 320, 322), un élément pouvant être sélectionné étant associé à une ou plusieurs des fonctions disponibles,
**caractérisé en ce que** les moyens de présentation sont aptes à afficher un premier menu des au moins deux menus sous la forme d'une première surface d'une représentation d'un objet spatial (402) sur un écran d'affichage, **en ce que** les moyens de présentation sont aptes à offrir une option de sélection de menu pour la sélection d'un deuxième menu des au moins deux menus, et **en ce que** les moyens de présentation sont aptes à afficher, après détection de la sélection de l'option de sélection de menu, le deuxième menu des au moins deux menus sous la forme d'une deuxième surface de ladite représentation de l'objet spatial, le premier menu étant alors au moins partiellement déplacé.

6. Système suivant la revendication 5, dans lequel la première surface de la représentation de l'objet spatial est attenante à la deuxième surface de la représentation de l'objet spatial, et dans lequel, après détection de la sélection du premier bouton de sélection de menu pouvant être sélectionné, la représentation de l'objet est déplacée par rotation (Fig. 3B) afin de tourner la première surface avec le premier menu dans une direction opposée à celle de l'utilisateur, et de tourner la deuxième surface avec le deuxième menu vers l'utilisateur.

7. Système suivant la revendication 5, dans lequel les moyens de présentation sont aptes à afficher un deuxième bouton de sélection de menu pouvant être sélectionné pour la sélection d'un troisième menu comportant une série d'éléments pouvant être sélectionnés dans laquelle un élément pouvant être sélectionné est associé à une fonction donnée des fonctions disponibles, et dans lequel les moyens de présentation sont aptes à afficher, après détection de la sélection du deuxième bouton de sélection de menu pouvant être sélectionné, le troisième menu sous la forme d'une troisième surface de ladite représentation de l'objet spatial.

8. Système suivant la revendication 7, dans lequel les moyens de présentation sont aptes à inclure un premier bouton de sélection de menu pouvant être sélectionné respectif et un deuxième bouton de sélection de menu pouvant être sélectionné respectif dans chacun des menus, chacune des trois desdites surfaces étant attenante aux deux autres surfaces, et dans lequel les moyens de présentation sont aptes àdéplacer par rotation, après détection de la sélection d'un bouton de sélection menu donné d'un menu donné, la représentation de l'objet afin de tourner la surface avec le menu donné dans une direction opposée à celle de l'utilisateur, et de tourner vers l'utilisateur la surface avec l'autre menu associé des trois menus, correspondant au bouton de sélection de menu donné.

9. Système suivant la revendication 5, dans lequel les moyens de présentation sont aptes à présenter la série d'éléments pouvant être sélectionnés d'au moins un des menus sous la forme d'une longue rangée de boutons respectifs.

10. Système suivant la revendication 5, dans lequel l'application est apte à déterminer, en fonction d'un état interne, laquelle des fonctions disponibles peut être instantanément sélectionnée, et dans lequel chacun des éléments pouvant être sélectionnés dans chacun des menus est associé à une ou plusieurs des fonctions pouvant être sélectionnées de manière instantanée.

11. Système suivant la revendication 5, permettant à l'utilisateur de sélectionner une fonction à partir d'une application pour la reproduction d'informations vidéo numériques.

12. Support de stockage lisible par machine contenant des données représentant un programme, lequel programme, lorsqu'il est exécuté sur un système, exécute un procédé suivant l'une quelconque des revendications 1 à 4.
